# EUROPEAN PATENT SPECIFICATION

(11) **EP 3 784 844 B1**
(45) Date of publication and mention of the grant of the patent: **05.06.2024**
(21) Application number: 19726793.3
(22) Date of filing: 23.04.2019
(51) Int. Cl.: E04C 5/07

(54) **FRP REBAR AND METHOD OF MAKING SAME**
FRP-BETONSTAHL UND VERFAHREN ZUR HERSTELLUNG DAVON
BARRE D'ARMATURE FRP ET PROCÉDÉ DE FABRICATION ASSOCIÉ

(30) Priority: 23.04.2018 US 201862661455 P
(43) Date of publication of application: 03.03.2021
(73) Proprietor: Owens Corning Intellectual Capital, LLC, Toledo, OH 43659 (US)
(72) Inventor: HARTMAN, David R., Granville, Ohio 43023 (US); SPOO, Kevin, Newark, Ohio 43055 (US)
(74) Representative: Novagraaf Group
(86) International application number: PCT/US2019/028611
(87) International publication number: WO 2019/209763

(56) References cited:
- CN-A- 106 481 026
- US-A- 5 182 064
- US-A- 5 650 109

## Description

### FIELD

The general inventive concepts relate to fiber reinforced materials and, more particularly, to fiber-reinforced plastic (FRP) rebar for reinforcing concrete and methods of making the FRP rebar.

### BACKGROUND

Rebar is commonly used to reinforce concrete structures such as roads, bridges, tunnels, airport runways, levies, and parking decks among others. In such structures, the rebar is embedded within the concrete and the external surface of the rebar is often ribbed in order to mechanically bind it to the concrete. The concrete provides compression strength (roughly speaking, resistance to compression) and the rebar provides tensile strength (resistance to pulling). Concrete is the most widely-used, man-made, construction material today.

Rebar products made out of composites of fibers and resin are known in the art, such as for example, disclosed in U.S. Pat. Nos. 9,624,667 and 8,511,038. As noted in the '667 patent, such composite rebar products provide several advantages over those made out of steel. First and foremost, composite-material rebar does not experience the corrosion and degradation that steel does in some concrete environments. As the steel rebar corrodes, it loses strength, thereby becoming less effective at carrying tensile, compressive, bending, or shear loads. Further, as the rebar corrodes, it expands substantially and "blows apart" the surrounding concrete mass, thereby rendering the concrete less effective at carrying compressive loads. As noted in the '038 patent, other advantages of composite rebar include being non-metallic (or non-magnetic) and non-conductive, having about two to three times the tensile strength and ¼ the weight of steel reinforcing rod, and having a co-efficient of thermal expansion more compatible with concrete or rock than steel rod. Such composite bars are often produced by a pultrusion process and have a linear or uniform profile. Conventional pultrusion processes involve drawing a bundle of reinforcing material (e.g., fibers or fiber filaments) from a source thereof, wetting the fibers and impregnating them (preferably with a thermo-settable polymer resin) by passing the reinforcing material through a resin bath in an open tank, pulling the resin-wetted and impregnated bundle through a shaping die to align the fiber bundle and to manipulate it into the proper cross sectional configuration, and curing the resin in a mold while maintaining tension on the filaments. Because the fibers progress completely through the pultrusion process without being cut or chopped, the resulting products generally have exceptionally high tensile strength in the longitudinal direction (i.e., in the direction the fiber filaments are pulled).

CN 106 481 026 discloses a composite reinforcing member according to the preamble of independent claim 1.

### SUMMARY

It is proposed herein to provide an improved composite rebar construction, as well as methods of making the improved composite rebar.

The improvement to the composite rebar can include, but is not limited to, one or more of increased durability, increased tensile strength, and increased elastic modulus, over conventional FRP rebar.

For example, the general inventive concepts encompass manufacturing techniques that produce higher modulus, tougher, more durable rebar. In some instances, the rebar includes a surface treatment that, whether the rebar is under tension, compression, or shear load, effectively transfers the load through adhesion and cohesion strength to put concrete into compression locally and shares the load across the rebar reinforcement (and the rebar spacing in a biaxial or unidirectional array) in the concrete to minimize cracking with deflection.

As a result of the enhanced properties of the improved FRP rebar, less of the composite rebar can be used (e.g., 1-1.3 times) when replacing steel rebar than would typically be necessary with conventional composite rebar (e.g., 1.5 or more times).

The present invention provides a composite reinforcing member comprising a plurality of fibers held together by a cured vinylester resin as set out in claim 1.

A method of forming the improved FRP rebar involves a pultrusion process that includes pre-forming, pre-heating, and pre-wetting continuous collimated glass fiber roving for consolidation to a uniform higher glass content, a higher modulus glass composition, or higher modulus hybrids in the pultruded rod. The pultruded rods are cured in a thermosetting resin without significant residual stresses causing voids, crazing, or splitting leading to premature failure from the load environment or durability issues. The cured rods provide internal reinforcement that uniformly shares load across the rod matrix and the area of work (strain energy absorption) with high shear modulus, high fracture toughness, and low damage accumulation rate.

A subsequent surface treatment applied to the cured rods can further enable appropriate strain for slippage and mechanical shear adhesion to place concrete in shear-compression for best cohesion under tension, compression, bending, or local shear loads when designing to the crushing threshold of concrete.

In one exemplary embodiment, a composite reinforcing member comprises a plurality of fibers held together by a cured vinylester rein, wherein the fibers are substantially parallel to one another, and wherein the vinylester resin is formulated to increase corrosion resistance of the reinforcing member.

In some exemplary embodiments, urethane is added to the vinylester resin. In some exemplary embodiments, novolac is added to the vinylester resin. In some exemplary embodiments, an acrylate is added to the vinylester resin. In some exemplary embodiments, epoxy is added to the vinylester resin. In some exemplary embodiments, vinyl chloride is added to the vinylester resin. In some exemplary embodiments, octyl silane is added to the vinylester resin. In some exemplary embodiments, silylated polyazamide is added to the vinylester resin. In some exemplary embodiments, a caprylic acid salt of n,n-dimethyl ethanolamine is added to the vinylester resin. In some exemplary embodiments, a morpholine-related amine is added to the vinylester resin.

In some exemplary embodiments, the vinylester resin has an elongation to break greater than 4%.

In some exemplary embodiments, the vinylester resin has a cure shrinkage in the range of 3% to 7%.

In some exemplary embodiments, the vinylester resin has a glass transition temperature in the range of 100 °C to 130 °C.

In some exemplary embodiments, the vinylester resin includes a metal additive. In some exemplary embodiments, the metal additive is iron black pigment.

The composite reinforcing member is a cylindrical rod. In some exemplary embodiments, the rod has a diameter in the range of 0.25 inches to 3.0 inches (6.4 mm to 76.2 mm). In some exemplary embodiments, the rod has a diameter in the range of 0.375 inches to 1.5 inches (9.5 mm to 38.1 mm). In some exemplary embodiments, the rod has a length in the range of 10 feet to 75 feet (3.1 m to 22.9 m). In some exemplary embodiments, the rod has a length in the range of 20 feet to 60 feet (6.1 m to 18.3 m).

The rod is straight. The fibers are less than 5 degrees off orientation from a central axis of the rod. In some exemplary embodiments, the rod has at least one bend greater than 45 degrees.

In some exemplary embodiments, a veil is wrapped around the rod. In some exemplary embodiments, the veil is one of a glass veil, a polyester veil, and an acrylic veil. In some exemplary embodiments, the veil has an areal density in the range of 10 g/m² to 50 g/m².

In some exemplary embodiments, the fibers consist of glass fibers. The glass fibers constitute at least 83% by weight of the composite reinforcing member.

The fibers comprise glass fibers. In some exemplary embodiments, a diameter of the glass fibers is in the range of 13 µm to 35 µm. In some exemplary embodiments, a diameter of the glass fibers is in the range of 17 µm to 32 µm. In some exemplary embodiments, a linear mass density of the glass fibers is in the range of 1,200 tex to 19,200 tex. In some exemplary embodiments, a linear mass density of the glass fibers is in the range of 2,400 tex to 8,800 tex.

In some exemplary embodiments, the fibers comprise first glass fibers and second glass fibers. In some exemplary embodiments, the first glass fibers and the second glass fibers differ from one another by glass composition. In some exemplary embodiments, the first glass fibers and the second glass fibers differ from one another by fiber diameter.

In some exemplary embodiments, the fibers comprise glass fibers and non-glass fibers. In some exemplary embodiments, the non-glass fibers are carbon fibers.

The fibers have a modulus of elasticity greater than 81 GPa. In some exemplary embodiments, the fibers have a modulus of elasticity greater than 88 GPa. In some exemplary embodiments, the fibers have a modulus of elasticity greater than 95 GPa.

In some exemplary embodiments, the fibers constitute between 83% and 88% by weight of the composite reinforcing member.

In some exemplary embodiments, the fibers constitute between 83% and 86% by weight of the composite reinforcing member.

The composite reinforcing member has a modulus of elasticity in the range of 60 GPa to 80 GPa.

The composite reinforcing member has an interfacial shear strength of at least 45 MPa.

The composite reinforcing member has a strain energy release rate of at least 1,000 J/g. Also described herein is a composite rebar for reinforcing concrete comprises a first material; a second material; and a cured vinylester resin, wherein a liner mass density of the first material is greater than a linear mass density of the second material, wherein the first material forms a core of the composite rebar, wherein the second material forms a sheath surrounding the core, and wherein the cured vinylester resin binds the sheath and the core together. While various exemplary embodiments are presented herein that involve a resin system used to form composite rebar being formulated or otherwise modified to include one or more additives that impart desired properties to the composite rebar, the general inventive concepts also contemplate that the additives could be introduced (instead of or in addition to via the resin system) by application of a coating to the composite rebar, such as when the rebar has not yet been fully cured (e.g., upon exiting the pultrusion die(s). Indeed, such coatings could be multi-purpose coatings imparting such properties as corrosion resistance, UV resistance, detectability, etc. to the composite rebar.

Whether the additives are introduced via the resin system and/or some form of coating, the additives are typically desired to be at or near a surface of the composite rebar to realize their intended effectiveness.

Numerous other aspects, advantages, and/or features of the general inventive concepts will become more readily apparent from the following detailed description of exemplary embodiments, from the claims, and from the accompanying drawings being submitted herewith, wherein the invention is defined solely by the appended claims.

### BRIEF DESCRIPTION OF THE DRAWINGS

The general inventive concepts, as well as embodiments and advantages thereof, are described below in greater detail, by way of example, with reference to the drawings in which:
Figure 1 is a graph showing modulus of elasticity retention of iso-polyester, vinylester, and epoxy FRP specimens exposed to an alkaline solution at each of 22°C, 40°C, and 60°C for 1,000 hours, 3,000 hours, and 5,000 hours.
Figure 2 is a graph showing tensile strength retention of iso-polyester, vinylester, and epoxy FRP specimens exposed to an alkaline solution at each of 22°C, 40°C, and 60°C for 1,000 hours, 3,000 hours, and 5,000 hours.
Figure 3 is a graph showing creep rupture data (as a measure of durability) for FRP rebar of polyester and vinylester resins.
Figures 4A and 4B are diagrams of a pultrusion line for making composite rebar rods, according to an exemplary embodiment.
Figures 5A and 5B are diagrams of a creel (e.g., of the infeed module) having horizontal and vertical tension alignment to control pull force of the rovings through the pre-former and surface packing. FIG. 5A is a side elevational view of the creel. FIG. 5B is a top plan view of the creel.
Figures 6A and 6B are diagrams illustrating the use of a series of stripper dies situated prior to the pultrusion die(s).
Figures 7A and 7B are diagrams showing resin impregnation through an immersion bath. FIG. 7A is a side elevational view of the resin bath. FIG. 7B is a top plan view of the resin bath.
Figures 8A and 8B are diagrams showing resin impregnation by direct metering. FIG. 8A is a side elevational view of the applicator. FIG. 8B is a top plan view of the applicator.
Figure 9 is a graph showing the tensile strength of composite rebar at 71% glass fiber volume relative to the filler content in the resin system.
Figure 10 is a graph showing the tensile strength retention of composite rebar under a sustained load and/or subject to a period of alkaline exposure.

### DETAILED DESCRIPTION

While the general inventive concepts are susceptible of embodiment in many different forms, there are shown in the drawings, and will be described herein in detail, specific embodiments thereof with the understanding that the present disclosure is to be considered as an exemplification of the principles of the general inventive concepts. Accordingly, the general inventive concepts are not intended to be limited to the specific embodiments illustrated herein.

The general inventive concepts encompass fiber-reinforced plastic (FRP) rebar for reinforcing concrete and the like, as well as systems for and methods of producing such composite rebar. The inventive FRP rebar has properties that depend on material and pultrusion process variable interactions. Accordingly, the following description of the general inventive concepts and exemplary embodiments thereof will focus on these input materials (e.g., glass and resin) and processing aspects, along with the resulting beneficial properties of the resulting rebar.

### Input Material

The composite rebar is formed by a pultrusion process (described below) in which continuous glass fibers, such as Advantex^{®} brand glass fibers, which are made of a boron-free E-CR glass composition, available from Owens Corning of Toledo, Ohio, are fed through a die to form a rod, bar, or other linear reinforcing member having a desired cross-section.

Typically, the reinforcing member will be in the shape of a rod having a circular cross-section. These rods can be cut to any desired length. In some exemplary embodiments, the rods can be shaped (e.g., bent) and/or joined with other rods to form more complex shapes and structures.

The input material has a modulus greater than 81 GPa, whether that be purely a glass composition or a hybrid material (e.g., combining glass and carbon fibers). In some exemplary embodiments, the input material has a modulus of greater than 88 GPa. In some exemplary embodiments, the input material has a modulus of greater than 95 GPa.

In some exemplary embodiments, a diameter of the glass fibers is within the range of 13 µm to 35 µm. In some exemplary embodiments, a diameter of the glass fibers is within the range of 17 µm to 32 µm.

In some exemplary embodiments, a linear mass density of the glass fibers is within the range of 1,200 tex to 19,200 tex. In some exemplary embodiments, a linear mass density of the glass fibers is within the range of 2,400 tex to 8,800 tex.

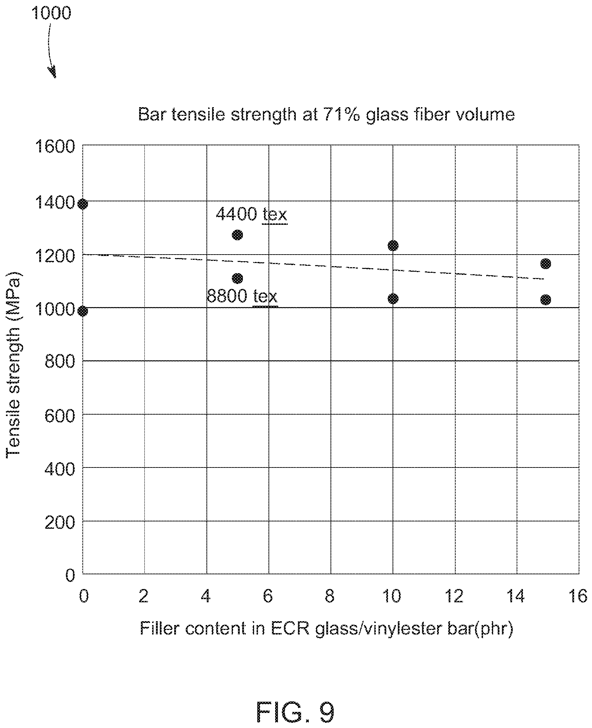

In some exemplary embodiments, wherein the density is relatively high (e.g., ≥ 8,800 tex) such that the diameter of the fibers is relative large (e.g., ≥ 32 µm), the addition of a filler material, such as clay, can help improve the tensile strength of the composite rebar with better tex bundle alignment and even resin distribution around the bundles to improve the shear lag effect in the composite rebar. It was unexpectedly found that less filler content could be used than believed necessary, which allows for increased fiber content for higher tensile modulus and strength in the composite rebar. For example, a fiber volume of 71% would be about 83% to 85% by weight of glass fibers depending on the filler content. As shown in the graph 900 of FIG. 9, in the case of an E-CR glass having 4,400 tex and a fiber diameter of around 17 µm (the dots above the dashed line), a filler content of 0 parts per hundreds of resin (phr) to 5 phr is desirable, while in the case of an E-CR glass having 8,800 tex and a fiber diameter around 32 µm (the dots below the dashed line), a filler content of 2 phr to 6 phr is desirable.

In some exemplary embodiments, wherein the input material assumes a more complicated arrangement/construction, such as a core-sheath arrangement, the input material for the core will have a larger tex than the input material for the outer sheathing.

The input material (e.g., glass fibers, carbon fibers) will typically have a sizing applied thereto that is compatible with the resin matrix being used to form the composite rod.

The glass content is at least 83 wt.% of the pultruded rod. Also described herein, is a pultruded rod where the glass or hybrid fiber content will be within the range of 65 wt.% to 88 wt.% of the pultruded rod. Also described herein, is a pultruded rod where the glass content will be within the range of 80 wt.% to 86 wt.% of the pultruded rod.

In some exemplary embodiments, the input material is a hybrid fiber content including a combination of E-CR glass fiber and high modulus glass fiber. In some exemplary embodiments, the input material is a hybrid fiber content including E-CR glass fiber and carbon fiber. In some exemplary embodiments, the input material is a hybrid fiber content including E-CR glass fiber and metal strand. In various exemplary embodiments having a sheath-core arrangement, the sheathing material can be E-CR glass fiber with the core containing E-CR glass fiber and/or some other fiber.

The inclusion of a metal strand in the composite rebar facilitates detection of the composite rebar in an embedded structure (e.g., concrete) using conventional, non-specialized detection means, such as ground-penetrating radar. Unlike steel rebar, composite rebar is not inherently detectable by such means. The ability to locate composite rebar in concrete structures is important for ensuring the structural integrity of concrete structures and assessing the integrity of the composite rebar in aged structures.

In some exemplary embodiments, the metal strand is part of a hybrid fiber input to the pultrusion process, as described above. In other exemplary embodiments, the metal strand is input to the pultrusion process separate from the other input materials (e.g., glass fibers).

In some exemplary embodiments, the composite rebar is made detectable by use of a metallic additive (e.g., added to the resin system). For example, iron black (Fe₃O₄, magnetite) pigment could be used to make the composite rebar detectable to conventional, non-specialized detection means including those that currently work for steel rebar. As the iron black pigment will also color the composite rebar black, other ferromagnetic additives could be used if this coloring is undesired. Other additives may enhance the effectiveness of the iron black material from a detectability standpoint, such as zinc oxide and carbon black. These other additives could also provide other benefits, such as improved UV resistance.

As noted above, instead of (or in addition to) introducing the additive to the resin system, the additives could be applied to the composite rebar in the form of a coating or via some other application method, such as electrostatic painting.

### Resin

The input glass fibers are held together by a resin binder that when cured (as described below) fixes the fibers relative to one another and forms the composite rebar.

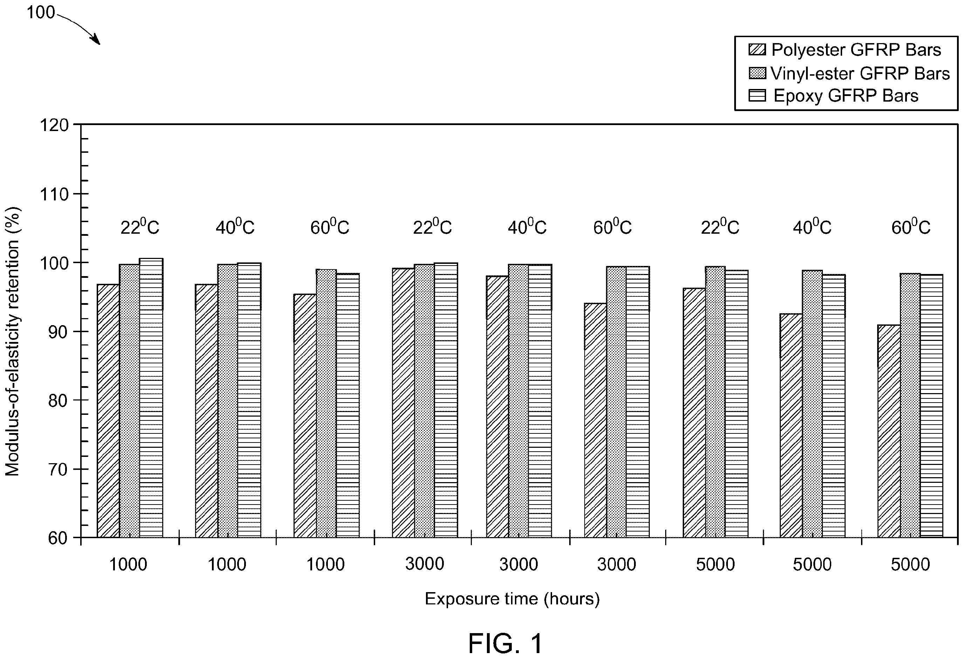

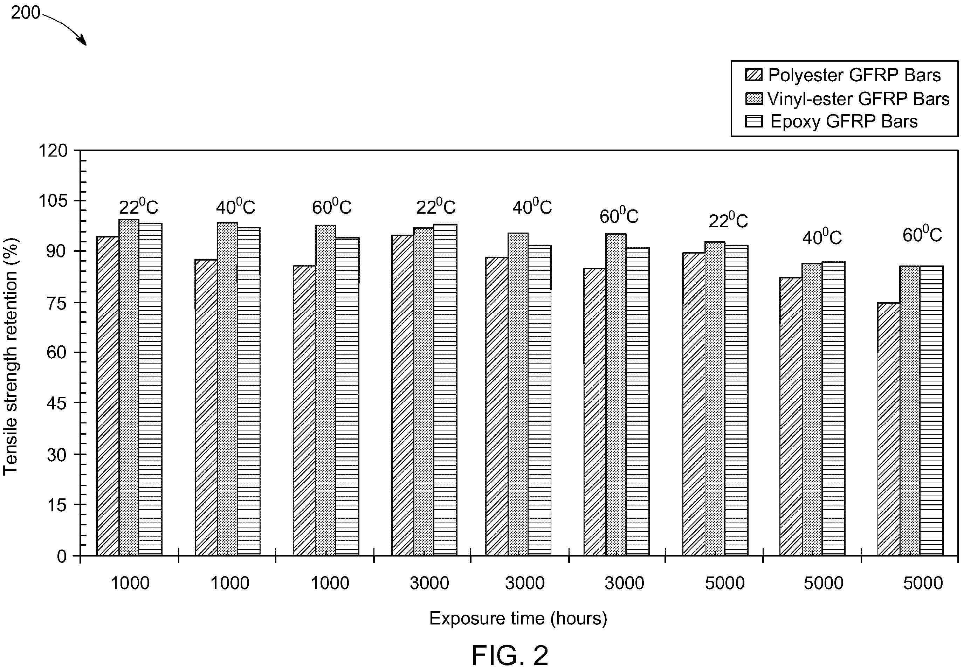

Polyester (PE) resins, vinylester (VE) resins, and epoxy (EP) resins are commonly used matrix resins or binders for forming composite rebar (see FIGS. 1 and 2).

Because the composite rebar will often be used as a reinforcement in harsh or otherwise corrosive environments, such as near seawater, selection of a resin that can survive in such an environment is an important design consideration.

Consequently, in addition to the higher glass content discussed above, high interfacial adhesion of the glass to the resin matrix, along with improved corrosion resistance of the rod surface, are important to achieve higher strength and modulus retention in the rebar for reinforcement of concrete in submerged seawater (see FIGS. 1 and 2).

It has been discovered that proper formulation or modification of a vinylester resin is important. For example, small additions of urethane or novolac or interpenetrating network of acrylic or other reactive monomer modification for styrene could further enhance corrosion resistance. High corrosion resistance may be further improved by removing resin from the resin-rich surface of the bar and/or applying a hydrated inhibitor, such as acrylate, vinyl chloride, octyl silane, and/or silylated polyazamide, which works with the concrete as a barrier for further corrosion resistance of the rebar and interface with the concrete.

Other additives may also be used. For example, caprylic acid salts of n,n-dimethyl ethanolamine or morpholine related amines are effective surface corrosion inhibitors that could be applied as a coating to the rebar to provide an improved concrete bonding interface. Other migrating agents could be applied as well to work during concrete crack initiation at the rebar interface to block further corrosion. Additionally, certain glass fiber interface sizing components like one or more of an acrylic, a salt, sodium or ammonium tetrafluoroborate, or crosslinker pentarthitol or itaconic acid, or highly crosslinking silane/silanol such as octyl silane forms a stable passivating layer or could work with the glass poly-condensed silicate surface to block or inhibit water and alkali ingression as an interfacial alteration layer. The glass/alteration layer interphase is more efficient than the glass itself in preventing water ingress. Water mobility in pristine and altered glass is strongly affected by chemical interactions with the solid phase. Under silica saturation conditions, the reorganized alteration layer achieves equilibrium with the bulk and pore solutions, and the residual corrosion rate dramatically diminishes due to transport-limiting effects near the glass surface. Ideal conditions for a stable passivating layer are typically less than 90 °C and 7 ≤ pH ≤ 9.5, silica-saturated solution, optimal for the concrete hydrate at the adhesive interface with the rebar.

In some exemplary embodiments, the rod could be wrapped with a glass, polyester, or acrylic veil with an areal density in the range of 10 gsm to 50 gsm.

The graph 100 of FIG. 1 and the graph 200 of FIG. 2 show that vinylester and epoxy resin based GFRP rods, maintain tensile modulus and strength with time and temperature in an alkaline environment, whereas polyester resin based GFRP rods drop 5-10% in performance with time and temperature under alkaline conditions. Table 1 details various standards and proposed endurance limits for composite rebar, wherein: "Cc" refers to creep rupture coefficient; "CE" refers to environmental coefficient; "ffu" refers to design strength; and "CL" refers to confidence limit.

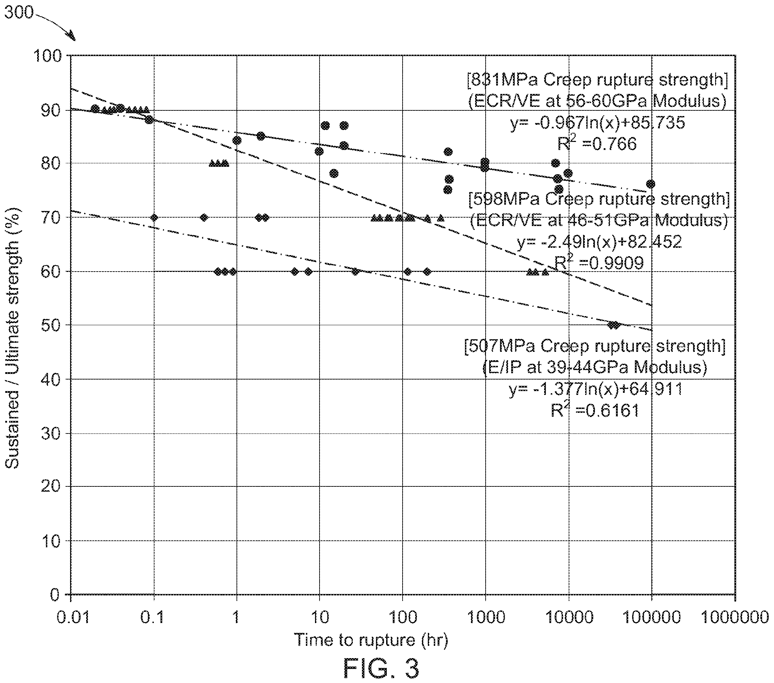

The time exposure is up to 5,000 hours without load which supports an environmental knockdown or CE of a proposed 0.9 given in Table 1, which is the proposed knockdown for the design strength. However, the higher knockdown factor for Cc or creep rupture endurance is a million hours constant static load threshold of 0.25 up to 0.50 or higher. Vinylester based rebars, as shown in the graph 300 of FIG. 3, have higher creep resistance than polyester bars. So, the glass composition as well as the resin matrix and formulation influence the design strength and service life of the composite rebar.

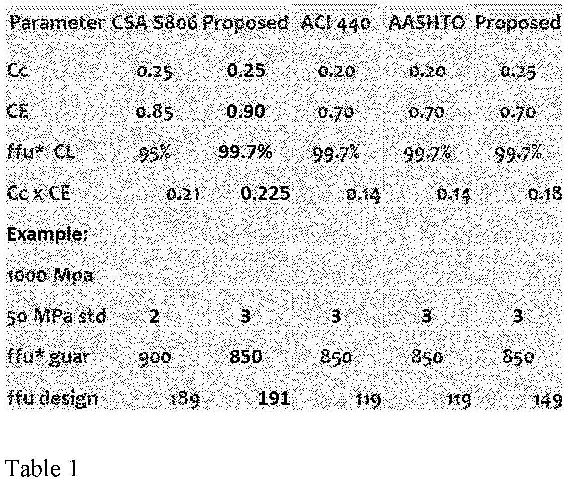

In FIG. 3, creep rupture data (as a measure of durability) is shown for (1) conventional E-glass/PE resin rebar having 39-44 GPa tensile modulus, 507 MPa tensile strength, and > 35% creep rupture limit; (2) E-CR glass/VE resin rebar having 46-51 GPa tensile modulus, 598 MPa tensile strength, and > 45% creep rupture limit; and (3) E-CR glass/VE resin rebar having 56-60 GPa tensile modulus, 831 MPa tensile strength, and > 60% creep rupture limit. The base resin chemistry and morphology, as well as interactions with constituents in the resin formulation and fiber sizing chemistry, effect the initial viscosity range of 100-1,000 cps under temperature and shear conditions in the process. For example, reducing the viscosity from 700 cps to 200 cps is also affected by process temperature and shear during resin wetting of fiber and consolidation thereof.

### Pultrusion Process

The FRP rebar of the present invention is formed by a pultrusion process. The pultrusion process is carried out by a pultrusion line, system, or the like.

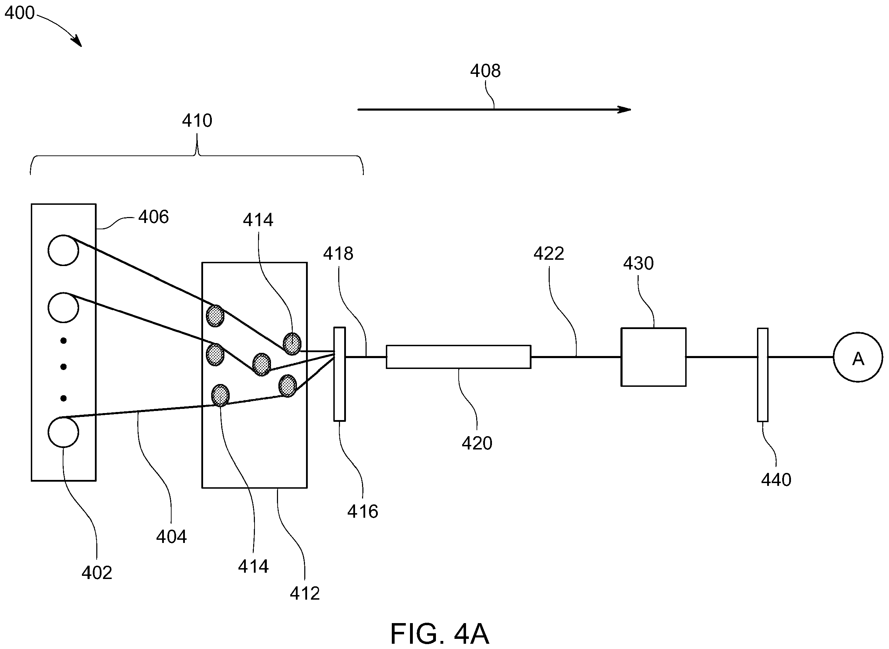

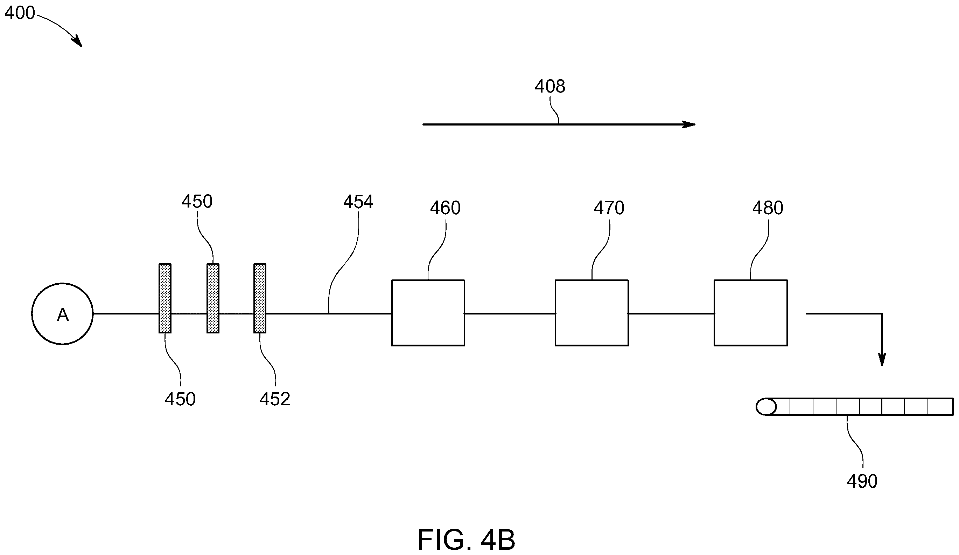

As shown in FIGS. 4A and 4B, a pultrusion line 400, according to an exemplary embodiment, can be used to form composite rebar 490. The pultrusion line 400 includes an infeed module 410, a resin bath 420, an optional in-line winder 430, one or more pre-formers 440, one or more dies 450, a control station 460, a pulling section 470, and a cutting section 480. As further described below, a surface treatment station (not shown) could also be provided. The surface treatment could occur before and/or after the pultruded rods are cut at the cutting section 480.

The pultrusion line 400 ensures that the input material (e.g., glass fiber) and related processing thereof is carefully controlled in fiber feed, resin formulation, resin impregnation, fiber architecture, alignment through the pre-former, drying and heating, wetting, wet-through, consolidation, and curing to form a continuous rod.

The infeed module 410 organizes the input material, for example, a collection of rovings 402 of glass fibers 404 (e.g., Type 30^{®} rovings available from Owens Corning of Toledo, Ohio) situated on a creel 406 or the like, for the pultrusion process. The rovings 402 can be single-end rovings and/or multi-end rovings.

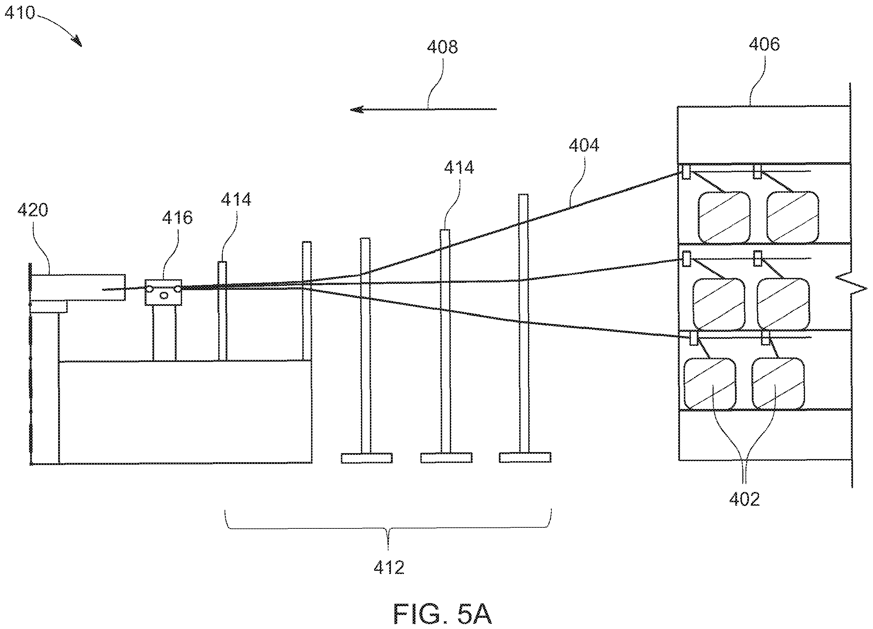

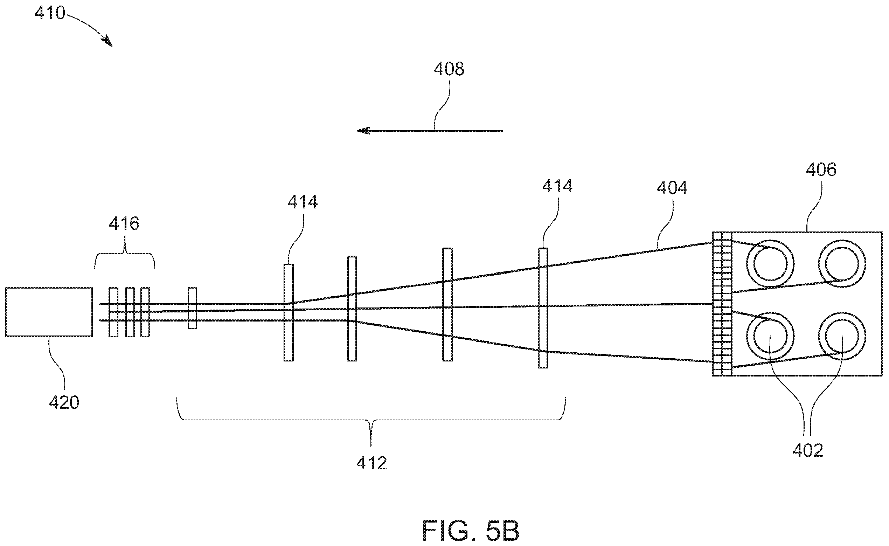

In one exemplary embodiment of the infeed module 410, as shown in FIGS. 5A and 5B, multiple rovings 402 are used depending on the desired rod diameter. An end of each roving 402 is fed toward the resin bath 420 in a pultrusion direction indicated by the arrow 408.

In this embodiment, the fibers 404 are fed through a cage 412 or other structure, such that the fibers 404 engage bars 414 disposed therein. The bars 414 impart an initial tension to the fibers 404 as they are drawn through the cage 412. The cage 412 also acts to begin positioning ends of the fibers 404 closer to one another prior to the ends being fed through a guide 416.

The guide 416 includes a plurality of apertures. An end of each of the fibers 404 is fed through one of the apertures in the guide 416. In this manner, the fibers 404 are positioned closer to one another and relatively parallel to one another, as the fibers 404 are drawn in the processing direction 408. Thus, as the fibers 404 exit the guide 416, they have begun to form a rope-like member 418 (hereinafter, the "rope").

The rope 418 is then drawn through the resin bath 420, such that a resin in the resin bath 420 surrounds the rope 418 and penetrates the spaces between the fibers 404 forming the rope 418. The rope 418 leaves the resin bath 420 as an impregnated rope 422.

The resin bath 420 contains a vinylester or modified thermosetting resin with elongation to break greater than 4%. It is important that the resin has a low cure shrinkage (e.g., 3-7% depending on formulation) without significant residual stresses causing voids, crazing, or splitting leading to premature failure from the load environment or durability issues. In one exemplary embodiment, the resin composition is a modified resin based on the Ashland 1398 vinylester resin matrix (supplied by Ashland, Inc. of Covington, Kentucky) or Interplastic 692 or 433 (supplied by Interplastic Corporation of St. Paul, Minnesota), having its crosslink density set by ratio of added styrene monomer for free radical autocatalytic cure to achieve a T_{g} within the range of 100 °C to 130 °C. Acrylic, novolac, or dicyclopentadiene (DCPD) monomer substitution of a portion (e.g., 10% to 30%) of the styrene may improve toughness, moisture durability, and satisfy fire-smoke-toxicity (FST) standards. These resin composition design choices should be balanced against their cost and influence on T_{g}, modulus, and crazing/cracking in rod cross-section greater than 0.8 mm from too high a cure rate.

**Table 2**

| Vinylester Resin FFU | Test Standard | Property |
|---|---|---|
| Durability - no polyester | ASTM D7957 5.2 | Meet physical and durability recquirements |
| Glass Transition (or HDT) | ASTM E1356 | T_{g} > 120 °C |
| Tensile Elongation or Break | ASTM D638 | > 4.5% |
| Tensile Modulus | ASTM D638 | > 3,200 MPa |
| Volume Shrinkage | | < 7% |

As noted above, the glass fibers 404 from the infeed module 410 pass through the resin bath 420 such that the glass fibers 404 are coated with the resin (i.e., wetting) and spaces between adjacent fibers are adequately filled with the resin (i.e., wet-through or impregnation). More specifically, the pultrusion line 400 uses multi-stage pre-forming where the glass fibers 404 are aligned vertically and horizontally (see FIGS. 5A and 5B) for positioning in the pre-former(s) 440 after they pass through the resin bath 420. In this manner, each discrete stage of the pultrusion line 400 consolidates the respective fiber bundles into 83% or greater glass content by weight or 68% or greater by volume, as the fibers 404 pass through the die(s) 450. The pre-former(s) 440 aid in the positioning and aligning of the input material including the resin. The pre-former(s) 440 also aid in packing the fibers together in a manner that avoids bunching, entanglement, and other undesirable problems with the input material.

The use of multi-stage pre-forming also enables selective placement of different fiber types (e.g., glass and carbon, combinations of different glass types, combinations of different fiber diameters), so as to produce a hybrid rod to improve elastic modulus or other attributes. The use of different fiber diameters in the input material can also facilitate achieving the increased content of the input material.

An in-line winder 430, such as one or more driven rolls, can be used in the pultrusion line 400 as a tension adjusting means. The winder 430 could be used, for example, if more pulling force is needed early in the pultrusion process (e.g., to draw the glass fibers 404 through the resin bath 420). Additionally, the ability to adjust the tension on the glass fibers 404 can facilitate the consolidation/packing of the glass fibers 404 before they enter the pre-former(s) 440.

The pultrusion line 400 employs pre-forming, pre-heating, and pre-wetting of the continuous collimated roving for consolidation to greater than 83% by weight glass content with high alignment (i.e., less than 5 degrees off orientation uniformly through the cross-section).

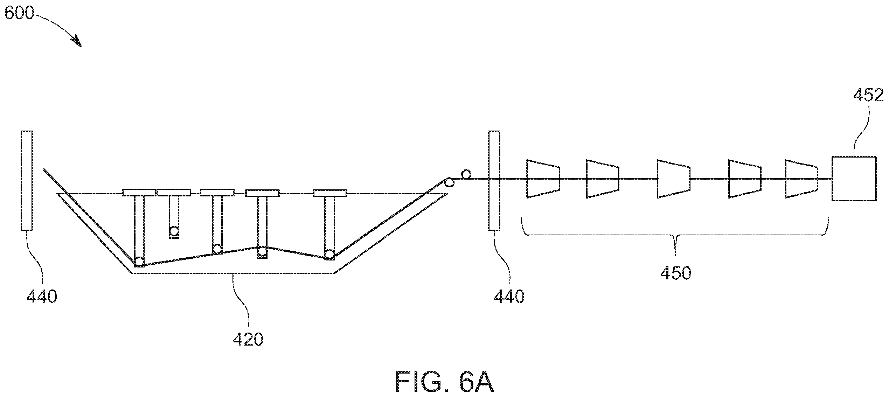

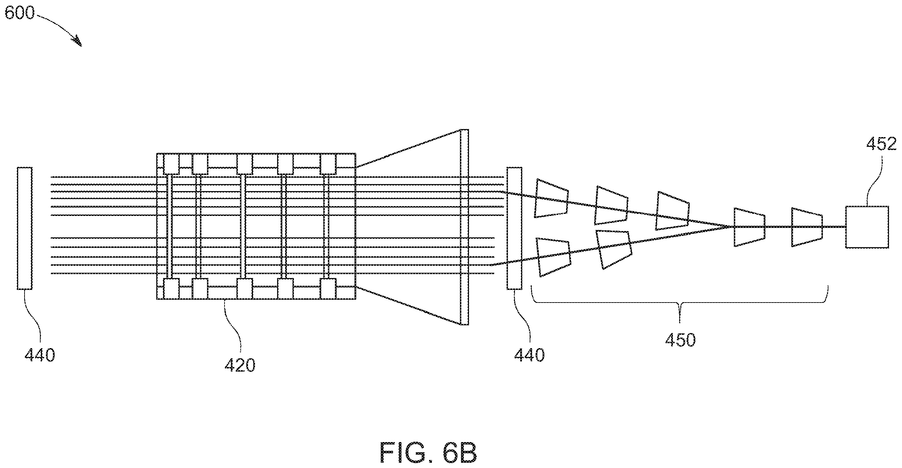

In some exemplary embodiments, one or more stripper dies 450 (see FIGS. 6A and 6B) are used prior to the pultrusion die(s) 452. In some exemplary embodiments, the stripper die(s) 450 and the pultrusion die(s) 452 are the same set of dies. When multiple stripper dies 450 are used, an aperture in each stripper die 450 will typically be smaller than an aperture in the preceding stripper die 450. The stripper dies 450 remove excess resin from the impregnated fibers and further consolidate the fibers 404 as the rod 454 is being formed.

The pre-heating of the glass drives off residual moisture and enables reduced resin viscosity at the glass surface to improve wetting and wet-through. Any suitable means of applying heat to the glass can be used. Such pre-heating can occur at multiple locations along the pultrusion line 400.

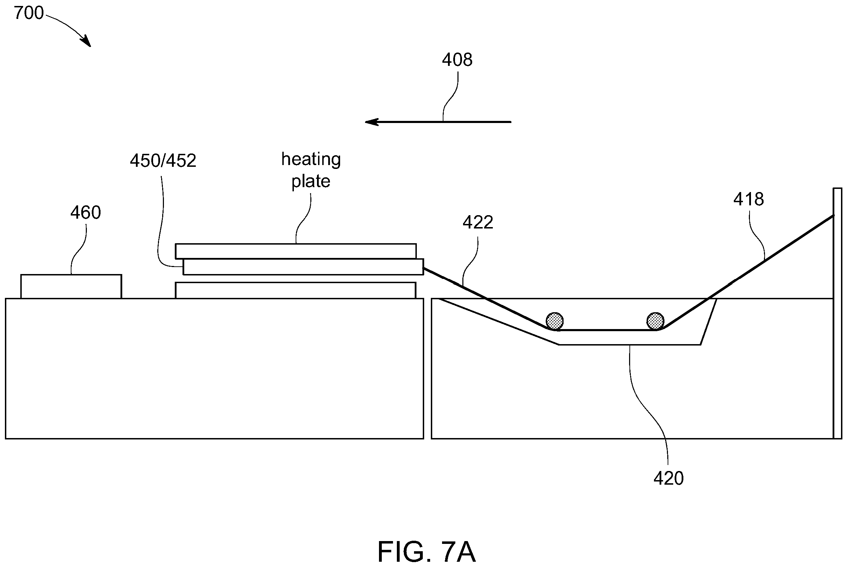

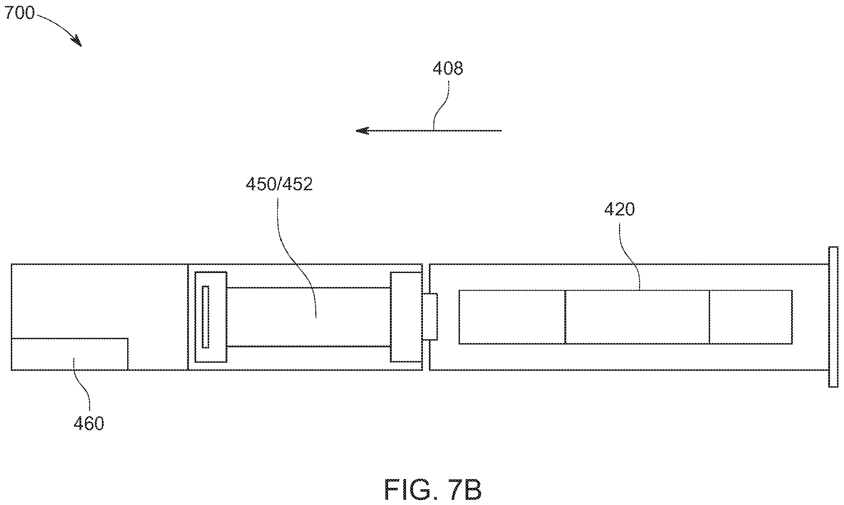

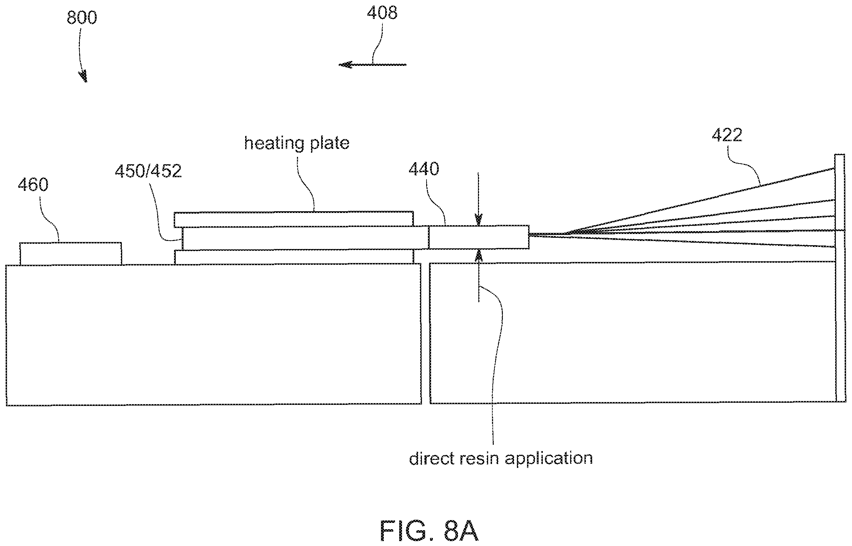

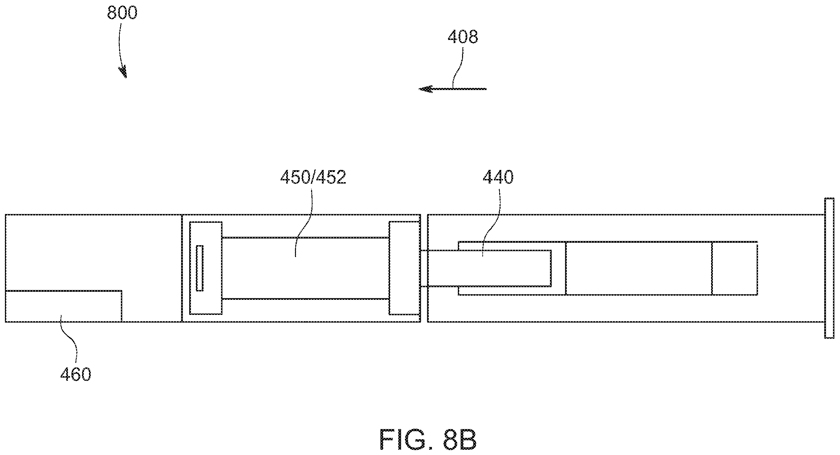

The pre-wetting of the glass fibers is facilitated by direct heating of the resin or otherwise controlling the viscosity of the resin in the immersion bath 420 (see the exemplary configuration 700 of FIGS. 7A and 7B) or as applied by position in the pre-former(s) 440 (see the exemplary configuration 800 of FIGS. 8A and 8B) to better achieve resin wetting for more dense consolidation by confinement and/or tension before gelation of the vinylester resin. Alternatively, the heating can be accomplished through indirect (e.g., radio-frequency) heating, which can allow more uniform inside-out heating.

Different glass tex and filament diameter combinations can be used to further improve the uniform glass packing, thereby enabling higher glass fiber volume.

Once entering the die(s) 450,452, which is the final consolidation point, heat from the die(s) 450 and/or 452 crosslinks the thermosetting resin, resulting in an exotherm within the consolidated fibers 422 to form a rod-like member 454 (herein, the "rod"). In some exemplary embodiments, a helical wrapping (e.g., of a glass fiber) is applied to the rod 454 to maintain the consolidation and placement of the fibers 404 therein.

The pultrusion line 400 will often include a control station 460, either as part of the pultrusion line 400 or situated in proximity (e.g., on-site) thereto. The control station 460, which can be a distributed control system (DCS), allows for computerized and/or manual control and management of the pultrusion line 400 and related process variables and conditions.

The rod 454 exits the pultrusion die(s) 452 and advances towards the puller system 470. The rod 454 is cooling as it reaches the puller system 470 such that it does not deform in the puller contact points. The pulling section 470 aids in exerting the pulling force required by the pultrusion process, i.e., to maintain the necessary tension on the rod 454 while it is being formed.

Finally, the rod 454 advances to the cutting section 480 where it is cut to length and collected for further processing, such as a surface treatment operation. The rod 454 can be cut to any suitable length, with the length often being determined by the intended application. In some exemplary embodiments the rod 454 is cut to a length of 10 ft. to 75 ft. In some exemplary embodiments the rod 454 is cut to a length of 20 ft. to 60 ft. Once cut, with or without any further treatment thereof, the rod 454 is considered the composite rebar 490.

Thus, the pultrusion line 400 uses pre-forming, pre-heating, and pre-wetting of continuous collimated roving for consolidation to greater than 83% by weight glass content with high alignment less than 5 degrees off orientation uniformly through the cross-section, in combination with a higher modulus (e.g., greater than 81 GPa) glass composition or higher modulus hybrids like glass-carbon, to achieve an increased interfacial shear strength (e.g., of 45 MPa or more) and strain energy release rate (e.g., of 1,000 J/g or more) with respect to the composite rebar 490.

Beyond controlled placement and delivery of the glass fibers (via the pre-former(s) 440) for more uniform packing, increased fiber volume, and better overall fiber alignment to improve the properties (e.g., the elastic modulus) of the pultruded rod, there is also opportunity to use glass compositions with higher modulus alone, hybridized preferential to the core or skin, or other fiber selective placement. Additionally, the general inventive concepts contemplate that other fiber types could be used in addition to or instead of glass fibers, such as organic fibers like carbon, basalt, and aramid, or other inorganic fibers. For example, as shown in FIG. 6B, two adjacent sets of stripper dies 450 can receive different fiber streams for ultimate delivery to a common pultrusion die 452.

In some exemplary embodiments, at least a portion of the rod cross-section could be hollow or foam cored instead of solid, such as by use of suitable die constructions and/or configurations or other processing techniques.

### Surface Treatment

Once the pultruded rod (having the improved properties) is formed, it can undergo further processing. This further processing can occur in-line or downstream (e.g., at a different time, at a different location). One example of such further processing is application of a surface treatment to the rod to increase the adhesion between the rod and a concrete matrix in which it is embedded.

The rebar surface treatment enables appropriate strain for slippage and mechanical shear adhesion to place concrete in shear-compression for best cohesion under tension, compression, bending, or local shear loads when designing to the crushing threshold of the concrete.

In some exemplary embodiments, the surface treatment involves altering (e.g., grinding) an outer surface of the rebar to change its surface features. In some exemplary embodiments, the machined surface is not coated, so as to promote contact of the concrete with the machined surface which can be higher in overall surface area than conventional surface treatments for improved strike-through, wetting, and bonding.

Typically, the machined surface treated rebar meets ACI440.3R B.3 threshold 8 MPa bond strength in concrete rebar pullout testing and ACI440.3R B.4 threshold 180 MPa transverse shear strength.

In some exemplary embodiments, the surface treatment involves using the residual exotherm heat from the pultruded rod exiting the die(s) 450, to help cure a thermosetting coating applied with sand sticking to the surface from a fluidized bed to form a sand coated rebar. This type of surface treatment may be more suitable for in-line processing than surface grinding.

### Rebar

In addition to the various properties (and related improvements) in the inventive composite rebar, as described above, durability tests were met for alkali resistance and creep rupture testing with respect to ACI440.3R B.6 and B.8, respectively.

Additionally, production of the inventive composite rebar is able to maintain a process diameter range tolerance of 0.005 inches (0.13 mm) or less.

Additionally, production of the inventive composite rebar is able to maintain an out-of-round tolerance of less than 0.002 inches (0.05 mm).

Additionally, production of the inventive composite rebar is able to maintain a warpage tolerance having a maximum bend of 0.015 inches (0.4 mm) (maximum deflection) when measured over a 60-inch (1.5 m) rod length.

Also described herein is a composite rebar with a modulus of elasticity within the range of 55 GPa to 80 GPa.

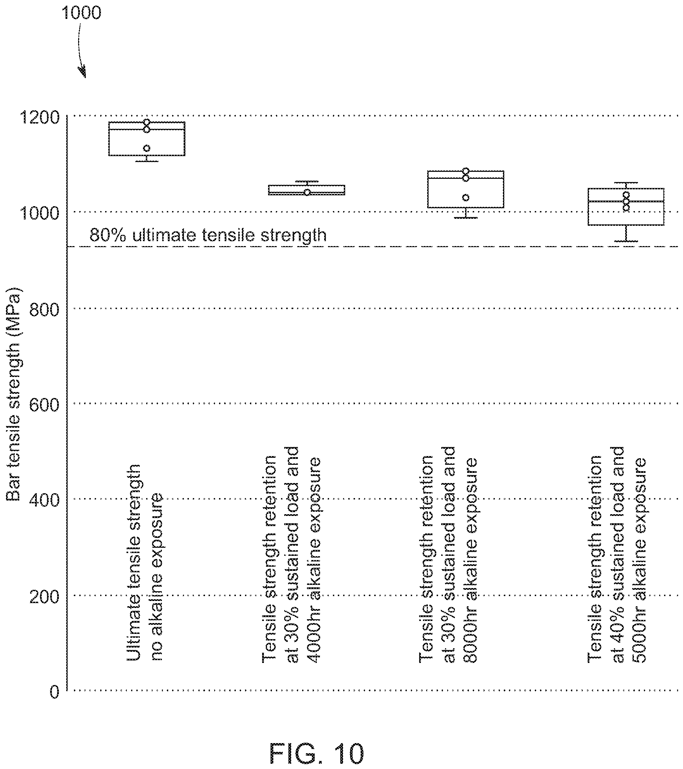

The inventive composite rebar has characteristics/attributes, as described herein, that allow for the internal reinforcement of concrete. These characteristics/attributes include, but are not limited to: corrosion free - for highly corrosive environments (including saltwater spray exposure and seawater submerged substructures); high tensile strength - two times greater than steel; lightweight (¼ the weight of steel) - for faster and safer on-site handling; cost effective replacement for steel (up to 60% cost savings); tunnel boring machine (TBM) equipment cuttable - for TBM tunnel development and soft-eyes; non-conductive - for smelter and power station developments; low thermal conductivity - for reduced energy costs in pre-cast sandwich walls; non-magnetic - for hospital and laboratory applications; and energy efficient - low carbon footprint. For example, the graph 1000 of FIG. 10 shows the tensile strength retention of the composite rebar under a sustained load and/or subject to a period of alkaline exposure.

In general, the inventive composite rebar enables higher modulus, good strength and/or improved durability performance, while supporting coupling and attachment schemes common to the industry for effective construction practices of pour-in-place internal reinforcement of concrete and pre-tensioned pre-stress of 25-50% in pre-cast concrete applications.

It will be appreciated that the scope of the general inventive concepts is not intended to be limited to the particular exemplary embodiments shown and described herein. From the disclosure given, those skilled in the art will not only understand the general inventive concepts and their attendant advantages, but will also find apparent various changes and modifications to the methods and systems disclosed. It is sought, therefore, to cover all such changes and modifications as fall within the scope of the general inventive concepts, as claimed herein, and any equivalents thereof. For example, while the described "further processing" of the composite rebar focused on treating a surface of the rebar, the general inventive concepts are not so limited and would encompass other forms of processing on the composite rebar, such as application of a post coating thereon (e.g., to improve hydrophobicity of the rebar).

## Claims

1. A composite reinforcing member comprising a plurality of fibers (404) held together by a cured vinylester resin,
wherein the composite reinforcing member is a cylindrical rod (454),
wherein the rod is straight,
wherein the fibers are substantially parallel to one another,
wherein the vinylester resin is formulated to increase corrosion resistance of the reinforcing member,
**characterized in that** the composite reinforcing member is formed by a pultrusion process that uses pre-forming, pre-heating, and pre-wetting of the fibers and resin such that:
the fibers comprise glass fibers, wherein the glass fibers constitute at least 83% by weight of the composite reinforcing member,
the fibers are less than 5 degrees off orientation from a central axis of the rod,
the fibers have a modulus of elasticity greater than 81 GPa,
the composite reinforcing member has a modulus of elasticity in the range of 60 GPa to 80 GPa,
the composite reinforcing member has an interfacial shear strength of at least 45 MPa, and
the composite reinforcing member has a strain energy release rate of at least 1,000 J/g.

2. The composite reinforcing member of claim 1, wherein the vinylester resin includes an additive selected from the group consisting of urethane, novolac, an acrylate, epoxy, vinyl chloride, octyl silane, silylated polyazamide, a caprylic acid salt of n,n-dimethyl ethanolamine, and a morpholine-related amine.

3. The composite reinforcing member of claim 1, wherein the rod has at least one bend greater than 45 degrees.

4. The composite reinforcing member of claim 1, wherein the vinylester resin has an elongation to break greater than 4%.

5. The composite reinforcing member of claim 1, wherein the vinylester resin has a cure shrinkage in the range of 3% to 7%.

6. The composite reinforcing member of claim 1, wherein the vinylester resin has a glass transition temperature in the range of 100 °C to 130 °C.

7. The composite reinforcing member of claim 1, wherein the fibers comprise glass fibers and carbon fibers

8. The composite reinforcing member of claim 1, wherein the fibers consist of glass fibers.

## Patentansprüche

1. Zusammengesetztes Verstärkungselement, umfassend eine Vielzahl von Fasern (404), die durch ein gehärtetes Vinylesterharz zusammengehalten werden,
wobei das zusammengesetzte Verstärkungselement eine zylindrische Stange (454) ist,
wobei die Stange gerade ist,
wobei die Fasern im Wesentlichen parallel zueinander verlaufen,
wobei das Vinylesterharz formuliert ist, um eine Korrosionsbeständigkeit des Verstärkungselements zu erhöhen,
**dadurch gekennzeichnet, dass** das zusammengesetzte Verstärkungselement durch ein Pultrusionsverfahren geformt wird, das Vorformen, Vorwärmen und Vorbenetzen der Fasern und des Harzes derart verwendet, dass:
die Fasern Glasfasern umfassen, wobei die Glasfasern mindestens zu 83 Gew.-% das zusammengesetzte Verstärkungselement ausmachen,
die Fasern weniger als 5 Grad von einer Ausrichtung von einer Mittelachse der Stange entfernt sind,
die Fasern einen Elastizitätsmodul von mehr als 81 GPa aufweisen,
das zusammengesetzte Verstärkungselement einen Elastizitätsmodul in dem Bereich von 60 GPa bis 80 GPa aufweist,
das zusammengesetzte Verstärkungselement eine Grenzflächenscherfestigkeit von mindestens 45 MPa aufweist, und
das zusammengesetzte Verstärkungselement eine Dehnungsenergiefreisetzungsrate von mindestens 1.000 J/g aufweist.

2. Zusammengesetztes Verstärkungselement nach Anspruch 1, wobei das Vinylesterharz ein Additiv einschließt, das aus der Gruppe ausgewählt ist, bestehend aus Urethan, Novolak, einem Acrylat, Epoxid, Vinylchlorid, Octylsilan, silyliertem Polyazamid, einem Caprylsäuresalz von n,n-Dimethylethanolamin und einem morpholinverwandten Amin.

3. Zusammengesetztes Verstärkungselement nach Anspruch 1, wobei die Stange mindestens eine Biegung von mehr als 45 Grad aufweist.

4. Zusammengesetztes Verstärkungselement nach Anspruch 1, wobei das Vinylesterharz eine Bruchdehnung von mehr als 4 % aufweist.

5. Zusammengesetztes Verstärkungselement nach Anspruch 1, wobei das Vinylesterharz eine Härtungsschrumpfung in dem Bereich von 3 % bis 7 % aufweist.

6. Zusammengesetztes Verstärkungselement nach Anspruch 1, wobei das Vinylesterharz eine Glasübergangstemperatur in dem Bereich von 100 °C bis 130 °C aufweist.

7. Zusammengesetztes Verstärkungselement nach Anspruch 1, wobei die Fasern Glasfasern und Kohlenstofffasern umfassen.

8. Zusammengesetztes Verstärkungselement nach Anspruch 1, wobei die Fasern aus Glasfasern bestehen.

## Revendications

1. Élément de renforcement composite comprenant une pluralité de fibres (404) maintenues ensemble par une résine vinylester durcie,
dans lequel l'élément de renforcement composite est une tige cylindrique (454),
dans lequel la tige est droite,
dans lequel les fibres sont sensiblement parallèles les unes aux autres,
dans lequel la résine vinylester est formulée pour augmenter la résistance à la corrosion de l'élément de renforcement,
**caractérisé en ce que** l'élément de renforcement composite est formé par un processus de pultrusion qui utilise le préformage, le préchauffage et le pré-mouillage des fibres et de la résine de manière à ce que :
les fibres comprennent des fibres de verre, dans lequel les fibres de verre constituent au moins 83 % en poids de l'élément de renforcement composite,
les fibres s'écartent de moins de 5 degrés de l'axe central de la tige,
les fibres ont un module d'élasticité supérieur à 81 GPa,
l'élément de renforcement composite a un module d'élasticité compris entre 60 GPa et 80 GPa,
l'élément de renforcement composite a une résistance au cisaillement interfaciale d'au moins 45 MPa, et
l'élément de renforcement composite a un taux de libération d'énergie de déformation d'au moins 1 000 J/g.

2. Élément de renforcement composite selon la revendication 1, dans lequel la résine vinylester comporte un additif choisi dans le groupe constitué d'uréthane, novolac, acrylate, époxy, chlorure de vinyle, silane d'octyle, polyazamide silylé, sel d'acide caprylique de la n,n-diméthyl éthanolamine et amine apparentée à la morpholine.

3. Élément de renforcement composite selon la revendication 1, dans lequel la tige présente au moins une courbure supérieure à 45 degrés.

4. Élément de renforcement composite selon la revendication 1, dans lequel la résine vinylester a un allongement à la rupture supérieur à 4 %.

5. Élément de renforcement composite selon la revendication 1, dans lequel la résine vinylester a un retrait de polymérisation compris entre 3 % et 7 %.

6. Élément de renforcement composite selon la revendication 1, dans lequel la résine vinylester a une température de transition vitreuse comprise entre 100 °C et 130 °C.

7. Élément de renforcement composite selon la revendication 1, dans lequel les fibres comprennent des fibres de verre et des fibres de carbone.

8. Élément de renforcement composite selon la revendication 1, dans lequel les fibres sont des fibres de verre.
